Europäisches Patentamt

European Patent Office

Office européen des brevets

(19)

(11) Veröffentlichungsnummer : **0 079 460**
**B1**

(12) **EUROPÄISCHE PATENTSCHRIFT**

(45) Veröffentlichungstag der Patentschrift :
26.06.85

(21) Anmeldenummer : 82109315.0

(22) Anmeldetag : 08.10.82

(51) Int. Cl.⁴ : **B 65 G 57/081, B 65 G 57/18**

(54) Stapelmaschine für Walzprofile.

(30) Priorität : 20.10.81 DE 3141476

(43) Veröffentlichungstag der Anmeldung :
25.05.83 Patentblatt 83/21

(45) Bekanntmachung des Hinweises auf die Patenterteilung : 26.06.85 Patentblatt 85/26

(84) Benannte Vertragsstaaten :
AT BE FR GB IT LU

(56) Entgegenhaltungen :
DD-A- 30 753
DD-A- 122 501
DE-A- 1 932 692
DE-A- 2 409 284
DE-B- 1 198 287
DE-B- 2 106 091

(73) Patentinhaber : MANNESMANN Aktiengesellschaft
Mannesmannufer 2
D-4000 Düsseldorf 1 (DE)

(72) Erfinder : Buchheit, Otto Karl
Am Eulental 2
D-6670 St. Ingbert/Saar (DE)

**Beschreibung**

Die Erfindung betrifft eine Stapelmaschine zum verschachtelten Stapeln von profilierten Walzstäben auf einem Stapelrollgang, von dem der gebildete Stapel abtransportiert wird, unter Verwendung von schwenkbaren Magneten zum Wenden einer Teilstabgruppe von n-1 Stäben auf eine ungewendete Teilstabgruppe mit n Stäben. Konventionelle Stapelvorrichtungen, die mit Wendemagneten arbeiten, benötigen einen Quertransport zum Übernehmen der in Ruhe befindlichen Walzstäbe von einem Rollgang, Einrichtungen zum räumlichen Trennen von Walzstabgruppen mit n und n-1 Stäben sowie Übergabevorrichtungen zum Übergeben von Teilgruppen der Walzstäbe auf den absenkbaren Stapelrollgang nebst Wendemagneten zur Übergabe von Teilstabgruppen auf die ungewendet abgelegte Stabgruppe (DE-PS 21 06 091 und DE-OS 24 09 284). Durch diesen Quertransport unterbrechen die bekannten Stapelvorrichtungen den natürlichen Fluß des Walzgutes innerhalb der Adjustage mit der Folge, daß diese einen hohen Platzbedarf hat und ziemlich unübersichtlich wird. Außerdem arbeiten die bekannten Stapelvorrichtungen verhältnismäßig langsam, weil neue Stabgruppen erst neben die Stapelvorrichtung vorgefahren werden können, nachdem die vorherige Stabgruppe ausgehoben, abgetragen und die Aushebevorrichtung in Grundposition zurückgestellt worden ist.

Es ist daher schon die Aufgabe gestellt worden (DE-OS 19 32 692), zum lagenweisen Übereinanderstapeln von Walzprofilen den Quertransport zu vermeiden. Zur Lösung dieser Aufgabe ist es bekannt, daß der Stapeltisch oder -rollgang in Verlängerung eines Sammlers vorgesehen ist, und daß zwischen diesem und dem Sammler eine Verteilvorrichtung, beispielsweise eine Schwenkzunge, zur wechselweisen Beschickung des Stapeltisches oder -rollganges und eines mit Abstand parallel zu diesem angeordneten Ausweichrollganges liegt, wobei die Stabgruppen vom Ausweichrollgang mittels Wendearmen auf den Stapeltisch oder -rollgang umsetzbar sind. Eine derartige bekannte Stapelvorrichtung löst jedoch das Problem nur zum Teil, weil die Lagenbildung trotzdem auf einem Quertransport vorgenommen werden muß und die beiden Rollgänge, nämlich der Stapelrollgang und der Ausweichrollgang mittels der Verteilvorrichtung bzw. Schwenkzunge nacheinander beschickt werden, und zwar z. B. bei Winkelstahl abwechselnd mit Stabgruppen von n und n − 1 Stäben. Dieser Vorgang ist im übrigen zeitraubend.

Der Erfindung liegt daher die Aufgabe zugrunde, eine Stapelmaschine für profilierte Walzstäbe dahingehend weiterzuentwickeln, daß Stabgruppen mit einer Stabzahl, die beide Teilstabgruppen von n Stäben und n − 1 Stäben umfaßt, zusammenhängend und gleichzeitig in die Stapelmaschine einlaufen können, und zwar in dichter Aufeinanderfolge der Stabgruppen. Die Lösung dieser Aufgabe besteht aus den im Patentanspruch 1 angegebenen Merkmalen.

Die Stapelmaschine gemäß der Erfindung ist zunächst dazu eingerichtet, aus einer Stabgruppe von 2n − 1 Stäben die beiden Teilstabgruppen mit der Stabdifferenz 1 während des Einlaufes selbst zu bilden, indem der Zufuhrrollgang entsprechend breit ausgeführt ist und die Trennung der Teilstabgruppen durch eine der Stapelmaschine vorgeordnete keilförmige Trennleiste erfolgt, die sich bis in die eigentliche Stapelmaschine fortsetzt (Merkmal a und b). Es werden hierdurch innerhalb der Stapelmaschine zwei Teilbreiten des Rollganges gebildet, denen je eine Gruppe von heb- und senkbaren Bremskufen zum Ausheben der Teilstabgruppen während der Bewegung zugeordnet sind, die nach dem Abgeben der von ihnen ausgehobenen Teilstabgruppe in senkrechte Schwenklage bewegbar und ohne die Rollgangsebene zu schneiden wieder in Aushebeposition unterhalb der Rollgangsebene zurückführbar sind (Merkmal c und d). Hierdurch wird es möglich, nach dem gleichzeitigen Ausheben der zwei Teilstabgruppen die nächste Gesamtstabgruppe in die Stapelmaschine einlaufen zu lassen, und zwar in dem Takt, wie diese Gesamtstabgruppe vom vorgeordneten Kühlbett in der richtigen Stabzahl abgetragen wird. Die Bremskufen, die der Teilstabgruppe mit n − 1 Stäben zugeordnet sind, sind als wahlweise um 90° (für die Senkrechtstellung zum Absenken) oder um 180° (zum Wenden der Teilstabgruppe mit n − 1 Stäben) ausgebildet (Merkmal e), so daß diese Teilstabgruppe an den um 180° geschwenkten Wendemagneten hängend über die andere Teilstabgruppe mit n Stäben gelangt, die von den nur um 90° in Senkrechtstellung schwenkbaren Bremskufen ausgehoben wurden. Hierdurch wird eine Doppellage von verschachtelten Profilstäben gebildet, die von waagerecht hin und her steuerbaren Übernahmemagneten seitlich bis über den Stapelrollgang transportiert werden, wo der Stapel auf schrittweise absenkbaren Stapeltisch-Armen gebildet wird (Merkmal f). Die Stapeltisch-Arme sind waagerecht schwenkbar ausgeführt, um nach dem Absetzen eines fertigen Stapels auf die Rollen des Stapelrollanges über eine Schwenkbewegung und ohne den ablaufenden Stapel zu schneiden in ihre Ausgangsposition oberhalb des Stapels und unterhalb der Bewegungsbahn der waagerecht steuerbaren Übernahmemagnete zurückzukehren (Merkmal g). Diese Rückkehr der heb- und senkbaren Stapeltischarme in obere Wirklage bei noch auf dem Rollgang befindlichem Stapel ermöglicht es, die nächste Doppelstablage während des länger andauernden Ablaufes des Stapels in dem Takt aufzunehmen, in dem die Gesamtstabgruppe in die Stapelmaschine einläuft. Die Stapelmaschine gemäß der Erfindung ist somit in der Lage, je nach der Breite des sich bis in die Stapelmaschine erstreckenden Zufuhrrollganges Stabgruppen mit hoher Stabzahl aus der Bewegung heraus mit optimaler Geschwindigkeit zu stapeln. Außer dem Wenden und der Übergabe von Doppellagen in den Bereich des Stapelrollganges findet kein Quertransport statt, so daß die Gesamtanlage der Adjustage äußerst platzsparend gebaut werden kann. Die Lagenbildung erfolgt bereits auf dem Kühlbett.

Weiterbildungen der Erfindung sind in den Patentansprüchen 2 und 3 angegeben.

In der Zeichnung ist ein Ausführungsbeispiel einer Stapelmaschine gemäß der Erfindung im Zusammenhang mit deren Anordnung in einer kontinuierlichen Adjustage dargestellt, und zwar zeigen

Figuren 1a und 1b eine Draufsicht der kontinuierlichen Adjustage im Anschluß an ein Kühlbett in zwei von links nach rechts aneinanderschließenden Darstellungen,

Figur 2 eine vergrößerte Teil-Draufsicht der Stapelmaschine,

Figur 3 einen Querschnitt durch die Stapelmaschine nach der Linie III-III in Fig. 1b und

Figur 4 ein Funktions-Schema zur Darstellung eines Stapelvorganges.

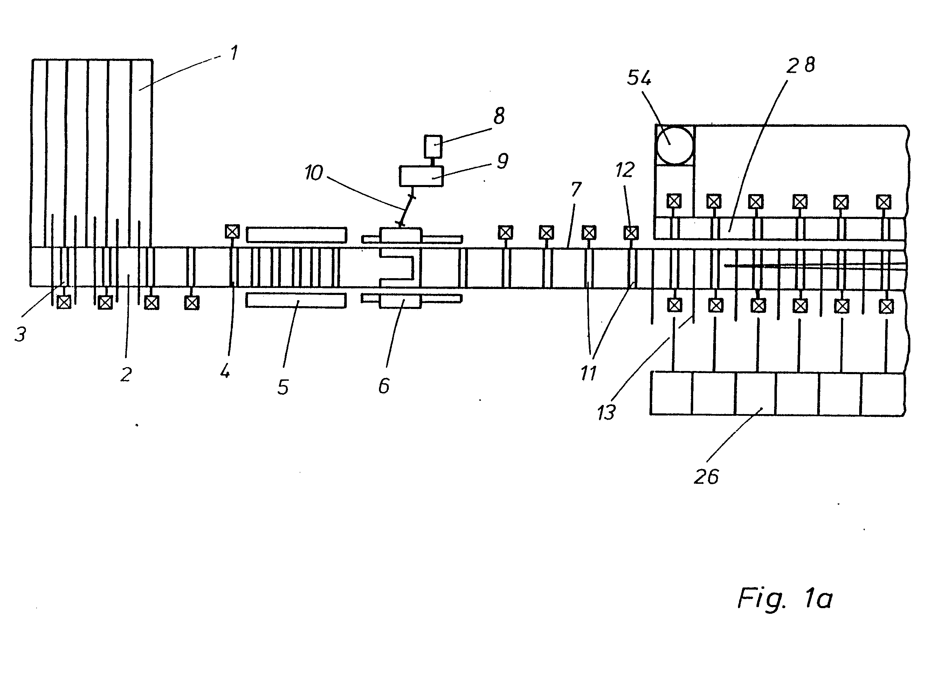

Die Draufsicht nach Fig. 1a zeigt das Ende eines Kühlbettes 1 mit dem Ablaufrollgang 2, auf den die gekühlten Walzstäbe in Kühlbettlängen mittels einer Austragevorrichtung 3 in Stabgruppen ungleicher Stabzahl übergeben werden. An den Ablaufrollgang 2 schließt sich ein Treibrollenpaar 4 sowie eine mehradrige Richtmaschine 5 an. Unmittelbar hinter der Richtmaschine 5 ist eine fliegende Schere 6 für kontinuierliche Arbeitsweise angeordnet, die auf einem Bett 7 in Vorschubrichtung hin- und herfahrbar ist. Das Obermesser der Schere ist von einem Antriebsmotor 8 über ein Vorgelege 9 und eine Gelenkwelle 10 angetrieben.

Der fliegenden Schere 6 ist ein Auflaufrollgang 11 nachgeordnet, dessen Antrieb, bestehend aus den Motoren 12, auf eine höhere Vorschubgeschwindigkeit eingestellt ist als diejenige des Treibrollenpaares 4 bzw. der Richtmaschine 5. Indem die Stabgruppen beispielsweise von der Vorschubgeschwindigkeit des Treibrollenpaares 4 bzw. der Richtmaschine 5 von 1 m/s auf 1,5 m/s beschleunigt werden, werden die von der fliegenden Schere 6 in Handelslängen unterteilten Stabgruppen auseinandergezogen.

Der Auflaufrollgang 11 ist mit einer Aushebe- und Bremsvorrichtung 13 versehen um Stabgruppen mit Unterlängen, die nicht gestapelt werden sollen, aus der Bewegung vom Rollgang auszutragen, die dann in einer Sammeltasche 26 gesammelt werden. Der als Aushebe- und Bremsvorrichtung 13 ausgebildete Auflaufrollgang 11 ist einer « Schwingrinne » nach der DE-AS 19 00 447 nachgebildet mit dem Unterschied, daß die rutschfähigen Aushebe- und Bremselemente zur Aufnahme von Gruppen von Stäben ausgebildet sind.

Der Auflaufrollgang 11 ist gleichzeitig Zufuhrrollgang 11a für die Stapelmaschine 27 gemäß der Erfindung und erstreckt sich über die Länge der Stapelmaschine. Neben dem Zufuhrrollgang 11a befindet sich ein Stapelrollgang 28, der sich mit seinem Bereich 28a nach rückwärts in Richtung des Kühlbettes 1 erstreckt und neben dem Auflaufrollgang 11 angeordnet ist. Auf der der Stapelmaschine 27 vorgeordneten Länge des Zufuhrrollganges 11a, also im Bereich des Auflaufrollganges 11 ist eine keilförmige Trennleiste 29 vorgesehen, die innerhalb der Rollgangsbreite etwas mittenversetzt ist und eine Stabgruppe mit der ungeraden Stabzahl 2n − 1 in zwei Teilstabgruppen mit n sowie n − 1 Stäben voneinander zu trennen vermag. Die Trennleiste 29 setzt sich innerhalb der Stapelmaschine bis zum Ende des Zufuhrrollganges 11a in zwei im Abstand zueinander parallel verlaufenden Trennwänden 29a fort, die abschnittsweise unterbrochen sein können. Die Breite des Rollganges 11 mit 11a muss mit Rücksicht auf die keilförmige Trennleiste 29 etwas größer sein als die Breite, die beide Teilstabgruppen mit insgesamt 2n − 1 Stäben einnehmen.

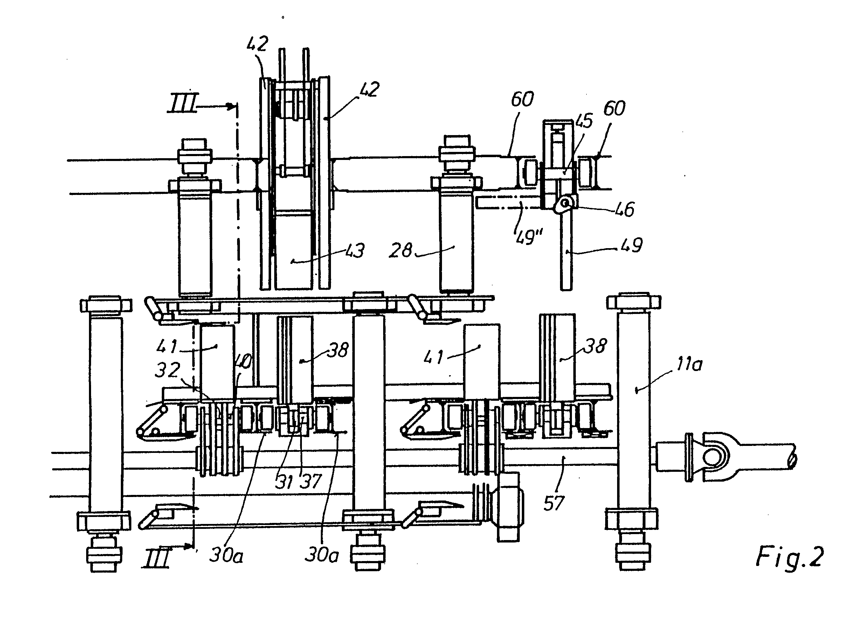

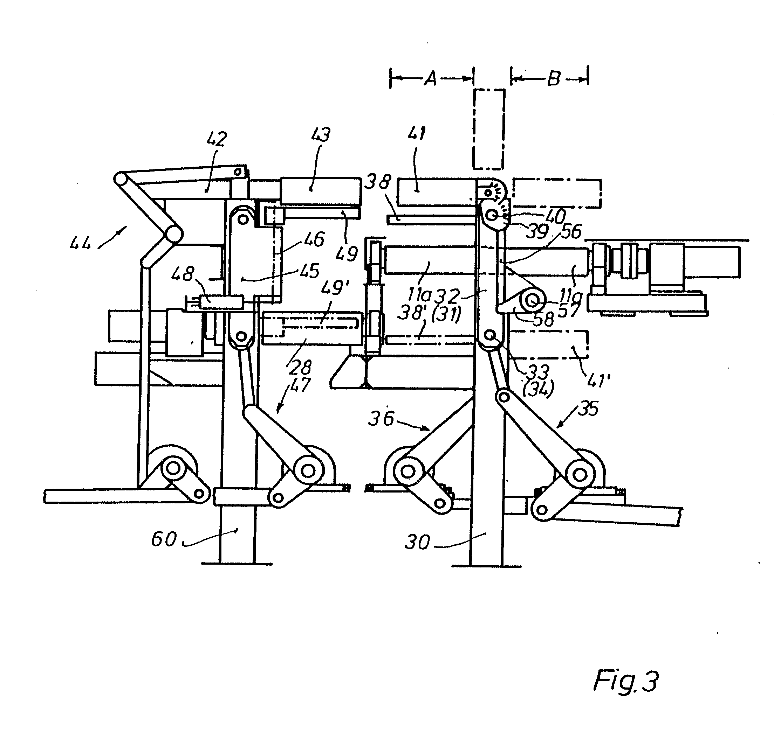

Um den Aufbau und die Funktion der Stapelmaschine gemäß der Erfindung näher zu erläutern, wird auf Fig. 2 und 3 verwiesen. Hiernach sind innerhalb der Flucht der Trennwände 29a über die Länge des Zufuhrrollganges 11a verteilte Senkrechtführungen 30 in Gestalt von je einem Paar von U-Profilen 30a angeordnet, deren aufeinanderweisende Schenkel jeweils einen Durchgang freilassen. Die Senkrechtführungen dienen zur Führung von gruppenweise gemeinsam und unabhängig voneinander auf und ab beweglichen Stößeln 31 und 32, von denen in Fig. 3 entsprechend dem Schnitt nach der Linie III-III in Fig. 2 nur der erste Stößel 32 einer Stösselgruppe zu sehen ist ; die Stößel 31 der anderen Stößelgruppe innerhalb der fluchtenden Senkrechtführungen 30 sind in Fig. 3 verdeckt. Die Stößel sind an den unteren Enden von Wellen 33 und 34 durchsetzt, an denen unabhängig steuerbare Hebe- und Senkantriebe 35 und 36 angreifen.

In den oberen Enden der Stößel 31 ist je eine kurze Schwenkwelle 37 gelagert (Fig. 2), auf denen je eine um 90° schwenkbare Bremskufe 38 aufgekeilt ist. Zum Verschwenken aller Bremskufen 38 aus der waagerechten Wirklage in eine senkrechte Schwenklage, in der die Bremskufen 38 in der Flucht der Senkrechtführungen 30 liegen, dienen nicht dargestellte Schwenkantriebe, die mitwandernd von den Stößeln getragen sind. In Fig. 3 erkennt man die in waagerechter Wirklage 38' befindlichen Bremskufen in einer unteren, strichpunktierten Darstellung unterhalb der Rollgangsebene des Zufuhrrollganges 11a und in einer voll ausgezogenen, angehobenen Höhenlage 38, über die hinaus die Bremskufen noch um einen geringen Betrag höher gestellt werden können, wie noch erläutert wird.

Auch die oberen Enden der Stößel 32 der anderen Gruppe sind jeweils von einer Drehwelle 40 durchsetzt (Fig. 2), auf der nach Fig. 3 nach links weisende schwenkbare Bremskufen 41 aufgekeilt sind. Diese Bremskufen 41 sind als Wendemagnete ausgebildet und mittels je eines auf die Drehwellen 40 einwirkendes Zahnradsegment 39 nicht nur um 90° in die Senkrechtstellung, sondern wahlweise auch um 180° über die aussenliegende Teilbreite des Zufuhrrollganges 11a schwenkbar. Zum Antrieb der Zahnradsegmente 39 dienen Schubstangen 56, die von einer gemeinsamen, von den Stößeln 32 getragenen Welle 57 und Hebeln 58 verstellbar sind.

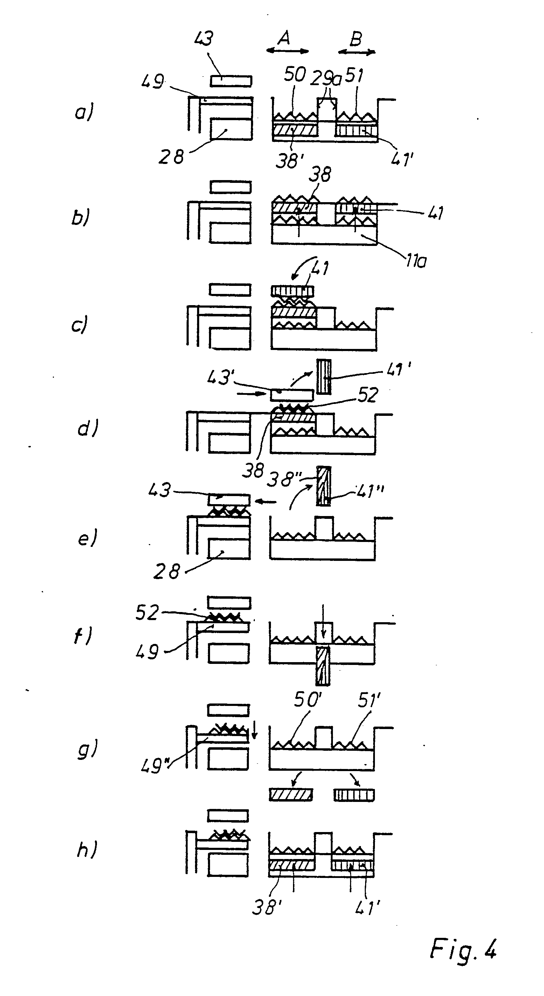

In Fig. 3 erkennt man die voll ausgezogenen Wendemagnet-Bremskufen 41 in größter Höhenlage, wogegen die strichpunktiert dargestellte untere Lage 41' derjenigen der Bremskufen 38' entspricht. Die gegenüber der Rollgangsebene des Zufuhrrollganges 11a scheinbar unnötig tiefe Lage der Bremskufen 38' und 41' ergibt sich aus der Notwendigkeit, daß diese Bremskufen aus der Senkrechtlage beim Absenken ihrer Stößel in die waagerechte Lage zurückschwenken müssen, ohne die Rollgangsebene zu schneiden. Sie werden sofort nach ihrem Abschwenken bis kurz unter die Rollgangsebene hochgefahren (Fig. 4a und h).

Etwa in der Höhe der sich in oberster Lage und in waagerechter Schwenklage befindlichen Wendemagnet-Bremskufen 41 sind seitlich neben dem Stapelrollgang 28 waagerechte Führungen 42 für hin und her steuerbare Übernahmemagnete 43 vorgesehen, die aus ihrer Lage über dem Stapelrollgang bis über die Teilbreite A bzw. die Bremskufen 38 vorsteuerbar sind. Zum Verstellen der Übernahmemagnete 43 dienen Antriebe 44.

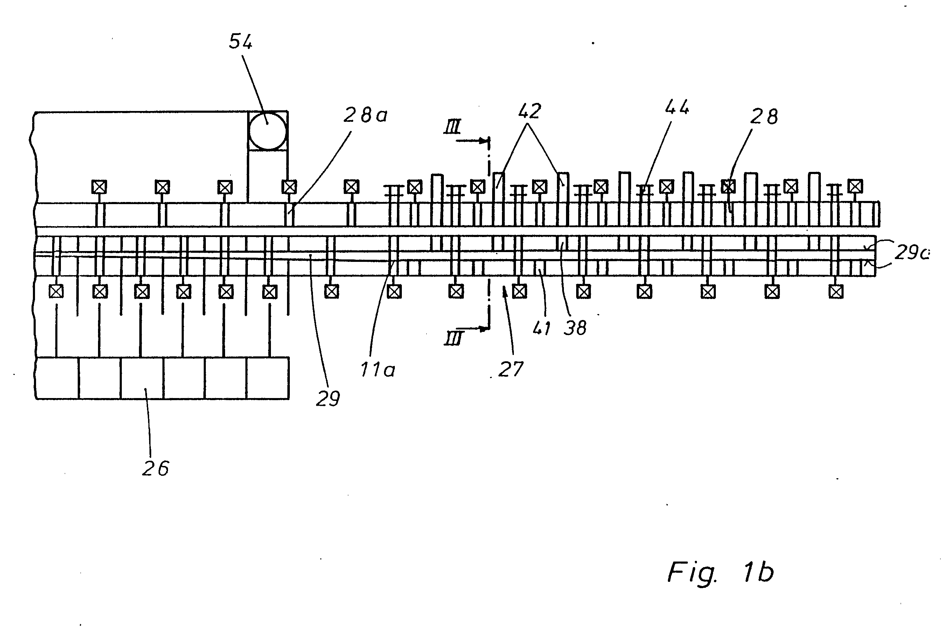

Auf der Aussenseite neben dem Stapelrollgang 28 sind ebenfalls verteilte U-förmige Senkrechtführungen 60 (Fig. 2) zur Führung von auf und ab beweglichen Stößeln 45 vorgesehen, die ebenso wie die Stößel 31 und 32 mit Laufrollen versehen sind. Die Stößel 45 sind zu Führungen für senkrechte Schwenkwellen 46 ausgebildet, die von einem Schwenkantrieb 48 gedreht werden können. Auf den Schwenkwellen 46 sind sich waagerecht erstreckende Stapeltisch-Arme 49 aufgekeilt, die über die Schwenkantriebe 48 und die Schwenkwellen 46 um 90° zwischen der oberen, voll ausgezogenen Wirklage und der unteren, strichpunktiert dargestellten Lage 49' unterhalb der Ebene des Stapelrollganges 28 verschwenkt werden können, um an einem fertig gebildeten Stapel vorbei in die obere Wirklage zurückkehren zu können, wenn der Stapel vom Rollgang 28 in den Rollgangsbereich 28a (Fig. 1b) transportiert wird. Zum Heben und Senken der Stößel 45 dienen Antriebe 47.

Die Wirkungsweise der in Fig. 2 und 3 dargestellten Stapelmaschine wird insbesondere anhand des in Fig. 4 dargestellten Funktionsschemas wie folgt näher erläutert.

Zunächst sei darauf verwiesen, daß in Fig. 4 die Bremskufen 38 schräg und die Wendemagnet-Bremskufen 41 senkrecht schraffiert dargestellt sind.

Vom Kühlbett 1 werden Kühlbettlängen mit einer ungeraden Stabzahl 2n – 1 auf den Ablaufrollgang ausgetragen. Handelt es sich um nicht richtpflichtiges Walzgut, so werden die Richtrollen der mehradrigen Richtmaschine 5 aufgezogen, und die Gesamtstabgruppe wird allein von dem Treibrollenpaar 4 mit einer definierten Vorschubgeschwindigkeit vorgeschoben, auf die die gleichförmige fliegende Bewegung der Schere 6 eingerichtet ist. Richtpflichtiges Gut wird von der mehradrigen Richtmaschine 5 mit der entsprechenden Richtgeschwindigkeit vorgeschoben. Durch die fliegende Schere werden die Kühlbettlängen in Handelslängen unterteilt, die dann durch die erhöhte Vorschubgeschwindigkeit des Auflaufrollganges 11 auf Lücke auseinandergezogen werden.

Im Bereich des Auflaufrollganges 11 wird die Stabgruppe mit 2n – 1 Stäben durch die keilförmige Trennleiste 29 in zwei nebeneinander laufende Teilstabgruppen 50 und 51 unterteilt, wobei im Ausführungsbeispiel die Teilstabgruppe 50 die Stabzahl n = 4 und die Teilstabgruppe 51 die Stabzahl n – 1 = 3 hat. Durch die sich in den Bereich des Zufuhrrollganges 11a der Stapelmaschine 27 fortsetzenden Trennwände 29a wird der Zufuhrrollgang in zwei Teilbreiten A und B unterteilt. Bei den im Ausführungsbeispiel zu stapelnden Walzstäben handelt es sich um Winkelstahl. Den Einlauf der beiden Teilstabgruppen 50, 51 in die Stapelmaschine 27 sowie die Ausgangsstellung der Bremskufen 38', der Wendemagnet-Bremskufen 41' sowie der Übernahmemagnete 43 zeigt Fig. 4a.

Zum Ausheben und Abbremsen der in Bewegung befindlichen Stäbe werden die beiden Hubvorrichtungen 35, 36 betätigt und damit die Bremskufen gleichzeitig in die angehobene Stellung 38 bzw. 41 bewegt. Wie Fig. 3 deutlicher zeigt, gelangen dabei die Wende-Bremskufen 41 auf ein höheres Niveau als die Bremskufen 38. Diesen Aushebe- und Bremsschritt zeigt Fig. 4b. Während dieses Schrittes können bereits die folgenden Teilstabgruppen 50 und 51 auf den Zufuhrrollgang 11a auflaufen.

Fig. 4c zeigt nun das Wenden der Teilstabgruppe 51 mit 3 Stäben durch Schwenken der Wendemagnet-Bremskufen 41 um 180°, wozu die gemeinsame Welle 57 um einen bestimmten Winkelbetrag gedreht wird. Die zur Ruhe gekommene Teilstabgruppe 51 mit 3 Stäben gelangt hierdurch über die ebenfalls zur Ruhe gekommene Teilstabgruppe 50 mit 4 Stäben. und zwar in stapelgerechter Zuordnung der Stäbe. Indem die Wendemagnete der Wendemagnet-Bremskufen 41 abgeschaltet werden, fällt die Stabgruppe 51 in die drei Lücken der Stabgruppe 50 (Fig. 4d), und gleichzeitig werden die Übernahmemagnete 43 über die Rollgangsbreite A vorgesteuert, in der sie die Lage 43' einnehmen. Ferner werden gleichzeitig die freigewordenen Wendemagnet-Bremskufen 41 in die Senkrechtlage 41" hochgeschwenkt. In dieser Senkrechtlage fluchten die Wendemagnet-Bremskufen 41 mit den Stößel-Senkrechtführungen 30 und der Trennleiste 29 und können somit zwischen den noch einlaufenden neuen Teilstabgruppen 50, 51 abgesenkt werden.

Die nach Fig. 4d auf den Bremskufen 38 liegende Doppellage 52 wird mittels der Antriebe 36 durch einen kurzen Überhub gegen die bereitstehenden Übernahmemagnete 43' angedrückt, die dann entsprechend Fig. 4e in die Lage 43 über den Stapelrollgang 28 zurückgesteuert werden. Die von der Doppellage 52 befreiten Bremskufen 38 werden dann ebenfalls in die Senkrechtlage 38'' hochgeschwenkt und fluchten dann mit den hochgeschwenkten Wendemagnet-Bremskufen 41''. Um die fluchtende Lage der beiden verschiedenen Bremskufentypen anzudeuten, sind in Fig. 4e und f die Schraffuren in diagonaler Verteil- und gezeichnet.

Bei dem Schritt nach Fig. 4f sind gleichzeitig die Doppellage 52 auf die hochgesteuerten Stapeltisch-Arme 49 abgeworfen sowie die fluchtenden Bremskufen 38 und 41 soweit abgesenkt worden, daß sie — wie Fig. 4g zeigt — ohne die Rollgangsebene bzw. die noch einlaufenden neuen Teilstabgruppen 50' und 51' zu schneiden in die waagerechte Wirklage zurückgeschwenkt und anschließend in die Ausgangslage hochgesteuert werden können (Fig. 4h). Die Stapeltisch-Arme 49 werden dann um einen Teilhub nach 49'' abgesenkt, um die nächste Doppellage 52 aufnehmen zu können. Daraufhin beginnt der Arbeitszyklus der Stapelmaschine mit Fig. 4a von neuem.

Die Vorschubgeschwindigkeit der auf den Zufuhrrollgang 11a auflaufenden Teilstabgruppen 50 und 51 beträgt nach dem Auseinanderziehen der Teilstabgruppen auf Lücke hinter der fliegenden Schere 6 ca. 1,5 bis 2 m/s, so daß die Stäbe relativ schnell zur Ruhe kommen und höchstens die letzten Bremskufen 38 bzw. 41 in Einlaufrichtung nach unten abgewinkelt werden müssen, damit die Stabspitzen nicht gegen die Bremskufen anstoßen. Die Stabgruppenfolge innerhalb der Stapelmaschine 27 entspricht der Folge, in der die Gesamtstabgruppen vom Kühlbett 1 auf den Ablaufrollgang 2 übergeben werden.

Indem mit der Stapelmaschine 27 gemäß der Erfindung Teilstabgruppen 50 und 51 nebeneinander gebildet und gleichzeitig ausgehoben, abgebremst und innerhalb der Stabgruppenfolge gestapelt werden, ist das kontinuierliche Prinzip durch die Erfindung über die gesamte Adjustage verwirklicht worden. Natürlich soll es nicht ausgeschlossen sein, daß die Teilstabgruppen 50, 51 durch Vorstöße zur Ruhe kommen.

Obwohl die Stapelmaschine 27 gemäß der Erfindung zum Wenden von profilierten Walzstäben kleinerer bis mittlerer Abmessungen konzipiert ist, können auch Rundstäbe gestapelt werden. Rundstäbe werden hinter der fliegenden Schere 6 durch nicht dargestellte Mittel ausschließlich in die Teilbreite A des Zufuhrrollganges 11a der Stapelmaschine geleitet, dort von den Bremskufen 38 im Aufwärtsgang abgebremst und wie beschrieben von den Übernahmemagneten 43 übernommen sowie über den Stapelrollgang 28 querverschoben. Die Stapeltisch-Arme 49 sind dann in der unwirksamen Lage 49', so daß die an den Übernahmemagneten hängenden Rundstäbe einfach in die Stapeltasche des Stapelrollganges 28 abgeworfen werden.

Die bei jedem Entmagnetisieren der Übernahmemagnete 43 fallengelassenen Stäbe werden durch eine am Ende des Stapelrollganges 28 gegen die Enden der jeweils abgeworfenen Stäbe drückbare Platte (nicht dargestellt) bündig gedrückt. Jeder fertige Stapel wird nach rückwärts in den Rollgangsbereich 28a transportiert, wo er durch eine verfahrbare Bindemaschine 54 gebunden und vom Kran übernommen wird. Der Rückwärts-Transport der Stapel empfiehlt sich aus Platzgründen und könnte selbstverständlich auch umgekehrt gerichtet sein.

Im Falle einer Störung an der Stapelmaschine 27 oder wenn Unterlängen vorkommen, werden die Gesamtstabgruppen von der Aushebe- und Bremsvorrichtung 13 aus dem Auflaufrollgang 11 ausgehoben, abgebremst und in die Stapeltasche 26 übergeben. Hierbei ist zu erwähnen, daß die Aushebe- und Bremsmittel der Vorrichtung 13 die keilförmige Trennleiste 29 in Lücken durchgreifen müssen.

## Patentansprüche

1. Stapelmaschine zum verschachtelten Stapeln von profilierten Walzstäben auf einem Stapelrollgang, von dem der gebildete Stapel abtransportiert wird, unter Verwendung von schwenkbaren Magneten zum Wenden einer Teilstabgruppe (51) mit n − 1 Stäben auf eine ungewendete Teilstabgruppe (50) mit n Stäben, gekennzeichnet durch

a) einen Zufuhr-Rollgang (11a) mit einer Breite von mehr als der Breite beider Teilstabgruppen von 2n − 1 Stäben,

b) eine keilförmige Trennleiste (29) auf der der Stapelmaschine (27) vorgeordneten Länge des Zufuhr-Rollganges zum Trennen einer Stabgruppe mit 2n − 1 Stäben in die beiden Teilstabgruppen (50, 51), die sich bis zum Ende des Zufuhr-Rollganges in zwei im Abstand voneinander parallel verlaufenden Trennwänden (29a) fortsetzt,

c) innerhalb der Trennwände (29a) über die Länge des Zufuhr-Rollganges verteilte Senkrechtführungen (30) für gruppenweise gemeinsam und unabhängig voneinander auf und ab bewegliche Stössel (31, 32),

d) an den oberen Enden der Stössel einer jeden Gruppe gelagerte Schwenkwellen (37, 40) mit Drehantrieben für mit den Schwenkwellen verbundene schwenkbare Bremskufen (38, 41) zum Ausheben der Teilstabgruppen vom Rollgang bei waagerechter Schwenklage der Bremskufen, die sich gruppenweise nach rechts und links über die Teilbreiten des Zufuhr-Rollganges erstrecken und nach einem Aufwärtshub in senkrechte Schwenklage steuerbar sind, in der sie in der Flucht der Senkrechtführungen (30) für die Stössel soweit abwärts steuerbar sind, daß sie — ohne die Rollgangsebene zu schneiden — in waagerechte Wirklage zurückschwenkbar sind,

e) die Ausbildung der Bremskufen (41), die in waagerechter Wirklage sich über die Teilbreite (B) des Zufuhr-Rollganges für die Teilstabgruppen (51) mit den n − 1 Stäben erstrecken, als Wendemagnete, die wahlweise um 90° oder 180° schwenkbar sind,

f) waagerechte Führungen (42) etwa in Höhe der sich in oberster Stellung und in waagerechter Schwenklage befindlichen Wendemagnet-Bremskufen (41) zur Führung von hin und her steuerbaren Übernahmemagneten (43) zum hängenden Transport von Stab-Doppellagen (52) aus der Rollgangs-Teilbreite (A) für die Teilstabgruppe (50) mit n Stäben bis über den seitlich des Zufuhr-Rollganges angeordneten Stapelrollgang (28), und durch

g) auf der Außenseite neben dem Stapelrollgang angeordnete, verteilte Senkrechtführungen (44) für auf und ab bewegliche Stössel (45), von denen senkrechte Schwenkwellen (46) und Schwenkantriebe (48) für mit den Schwenkwellen verbundene waagerecht hin und her schwenkbare Stapeltisch-Arme (49) zur Übernahme von Stab-Doppellagen (52) angeordnet sind, die nach Absetzen eines gebildeten Stapels auf den Stapelrollgang — ohne den Stapel zu schneiden — durch ihre Schwenkbewegung in Aufnahmestellung oberhalb des ablaufenden Stapels und unterhalb der waagerecht geführten Übernahmemagnete (43) zurückführbar sind.

2. Stapelmaschine nach Anspruch 1, dadurch gekennzeichnet, daß Dreh- bzw. Schwenkantriebe für Schwenkwellen (37, 46) mitwandernd von Stösseln (31, 45) getragen sind.

3. Stapelmaschine nach Anspruch 1, dadurch gekennzeichnet, daß an einem Ende des Stapelrollganges (28) eine gegen die Enden der jeweils abgelegten Stab-Doppellagen (52) drückbare Platte zum Bündiglegen aller Stäbe angeordnet ist.

**Claims**

1. A mechanical stacker unit for interlaced stacking of shaped rolled bars on a stacker roller table from which the built up bar packs are removed with the aid of slewable solenoids, turning one bar pack partial group (51) comprising n − 1 bars onto an unturned bar pack partial group (50) in which the number of bars is n, characterized by the following features, namely :

a) an approach roller table having a width greater than that of 2n − 1 bars (partial groups 50 + 51) ;

b) a wedge-shaped partition strip (29) along the length of the approach roller table section ahead of the stacker (27), capable of separating 2n − 1 bars into two bar pack partial groups (50 and 51) and continuing in the form of two spaced parallel partitions (29a) ;

c) vertical guides (30) distributed over the length of the approach roller table within the partitions (29a) so as to accommodate grouped movable rams (31, 32) capable of raising and lowering groupwise or individually ;

d) slewing shafts (37, 40) arranged at the top ends of the rams in each group, featuring drives for the slewable brake skids (38, 41) connected to the slewing shafts to pick up bar pack partial groups from the roller table, the brake skids being in the horizontally slewed position, extending groupwise to the right and to the left over the lanes (A and B) of the approach roller table and steerable into vertical slewing position following a lifting stroke when they can be lowered flush into the vertical ram guides (30) to such an extent that they slew back into horizontal home position without cutting accross the roller table plane ;

e) the brake skids (41) when in their horizontal home position extend over the width of the roller table's lane (B) for the n − 1 bar partial pack groups (51) and are designed as turning solenoids optionally capable of slewing through 90 or 180 degrees ;

f) horizontal guides (42) arranged roughly on level with the topmost horizontal slewing position of the turning solenoids cum brake skids (41) to guide the horizontally movable and steerable transfer solenoids (43) for handling suspended double bar pack layers (52) off the approach roller table « A » lane for the n bar partial pack groups (50) up to above the stacker roller table (28) arranged at the side of the approach roller table ; and

g) vertical guides (44) arranged at the outside next to the stacker roller table to accommodate raisable and lowerable rams (45) from which the vertical slewing shafts (46) with their drives (48) extend to the connected horizontally moveable stacker table arms (49) to receive the double bar pack layers (52) so that, a built up bar stack having been deposited on the stacker roller table, they can slew back into their home position above the stack being formed and below the horizontally steered transfer solenoids (43) without cutting across the stacker plane.

2. A mechanical stacker unit to Claim 1, characterized by drive elements for slewing shafts (37, 46) being carried along on rams (31, 45).

3. A mechanical stacker unit to Claim 1, characterized by the fact that a lay-flush plate at the end of the stacker roller table (28) can be applied against the ends of all the bars in each deposited double bar pack layer (52).

**Revendications**

1. Empileuse pour l'empilage par emboîtement de profilés de laminage sur une table de rouleaux d'empilage, à partir de laquelle la pile constituée est évacuée au moyen d'aimants pivotables, pour retourner un groupe de barres (51) comprenant n − 1 barres sur un groupe de barres non retourné (50) de n barres, caractérisée par

a) une table de rouleaux d'amenée (11a) d'une largeur supérieure à la largeur des deux groupes de barres de 2 n − 1 barres,

b) un listel de séparation conique (29) sur la longueur de la table de rouleaux d'amenée prioritaire par rapport à l'empileuse (27), pour séparer un groupe de barres de 2 n − 1 barres en les deux groupes de barres (50, 51), se poursuivant jusqu'à l'extrémité de la table de rouleaux d'amenée en deux parois de séparation (29a) écartées et parallèles l'une par rapport à l'autre,

c) des guidages verticaux (30) répartis dans les parois de séparation (29a) sur la longueur de la table de rouleaux d'amenée, pour des tiges-poussoir (31, 31) montantes et descendantes en commun par groupes et indépendamment les unes des autres,

d) des arbres de pivotement (37, 40) logés aux extrémités supérieures des tiges-poussoir de chaque groupe, avec moteurs de rotation pour des patins de freinage pivotables (38, 41) reliés avec les arbres de pivotement, pour enlever les groupes de la table de rouleaux, les patins de freinage étant en position de pivotement horizontale, et s'étendant par groupes vers la droite et vers la gauche sur les largeurs partielles de la table de rouleaux d'amenée et pouvant être commandés après une course ascendante, en position de pivotement verticale dans laquelle ils peuvent être commandés dans l'alignement des guidages verticaux (30) des tiges-poussoir, aussi loin vers le bas jusqu'à ce qu'ils puissent être pivotés en retour en position d'action horizontale — sans couper le niveau de la table de rouleaux,

e) la conception des patins de freinage (41) s'étendant en position d'action horizontale, sur la largeur partielle (B) de la table de rouleaux d'amenée des groupes de barres (51) avec les n − 1 barres, en tant qu'aimants retourneurs pivotables au choix de 90° ou de 180°,

f) des guidages horizontaux (42) à peu près au niveau des patins de freinage à aimant retourneur (41) placés en position supérieure et ne position de pivotement horizontale, pour le guide d'aimants de reprise (43) à commande de va-et-vient pour le transport suspendu de double-nappes de barres (52) à partir de la largeur partielle (A) de la table de rouleaux pour le groupe de barres (50) de n barres jusqu'au-dessus de la table de rouleaux d'empilage (28) disposée latéralement à la table de rouleaux d'amenée, et par

g) des guidages verticaux (44) disposés sur le côté extérieur à côté de la table du rouleau d'empilage, pour les tiges-poussoir montantes et descendantes (45) auxquelles des arbres de pivotement verticaux (46) et des moteurs de pivotement (48) sont disposés pour des bras de table d'empilage (49) pivotables en va-et-vient, reliés horizontalement avec les barres de pivotement pour la reprise de double-nappes de barres (52) qui, après dépose d'une pile constituée sur la table de rouleaux d'empilage, peuvent être ramenés — sans couper la pile — par leur mouvement de pivotement en position de reprise au-dessus de la pile évacuée et au-dessous des aimants de reprise (43) guidés horizontalement.

2. Empileuse suivant revendication 1 caractérisée en ce que des moteurs d'orientation ou de pivotement pour arbres de pivotement (37, 46) sont supportés de façon accompagnante par des tiges-poussoir (31, 45).

3. Empileuse suivant revendication 1 caractérisée en ce qu'à l'extrémité de la table de rouleaux d'empilage (28) une plaque pouvant être poussée contre les extrémités des double-nappes de barres (52) déposées, est disposée pour l'alignement de toutes les barres.

Fig. 1a

0 079 460

Fig. 1b

Fig.2

0 079 460

Fig.3

Fig. 4